# EUROPEAN PATENT SPECIFICATION

(11) **EP 1 775 236 B1**
(45) Date of publication and mention of the grant of the patent: **24.11.2010**
(21) Application number: 05773840.3
(22) Date of filing: 01.07.2005
(51) Int. Cl.: B65D 85/78, B65D 83/00, A23G 9/50

(54) **METERING CONTAINER FOR CREAMY ICE CREAM**
DOSIERBEHÄLTER FÜR CREMIGE EISKREM
EMBALLAGE DOSEUR DE GLACE A LA CREME

(30) Priority: 02.07.2004 ES 200401613; 05.10.2004 ES 200402363
(43) Date of publication of application: 18.04.2007
(73) Proprietor: BIG DRUM IBERICA, S.A., 43205 Reus, Tarragona (ES)
(72) Inventor: VECIANA I MEMBRADO, Josep, Maria, E-43205 REUS (Tarragona) (ES); SAROBE ALEPUZ, Juan, E-43205 REUS (Tarragona) (ES)
(74) Representative: Carpintero Lopez, Francisco
(86) International application number: PCT/ES2005/000378
(87) International publication number: WO 2006/005781

(56) References cited:
- EP-A1- 0 093 185
- EP-A1- 0 995 685
- WO-A2-2004/063997
- DE-A1- 3 202 275
- US-A- 1 933 596
- US-A- 2 196 379
- US-A- 4 782 983
- US-A1- 2003 008 041
- US-A1- 2003 015 144
- US-A1- 2003 132 253
- US-A1- 2003 197 036

## Description

### OBJECT OF THE INVENTION

The present invention has its application in the industry engaged in the manufacture of packs for creamy ice cream as per the preamble of claim 1.

An object of the invention is that the pack should be tubular and elongated, that it should have thrust means on at least one of its smaller sides that exert pressure on the food for the purpose of its extrusion by way of holes arranged in the larger face or faces of the pack.

The invention advocated refers to a dispenser pack for ice cream of the type made up of a functional combination of a tubular body that holds its interior a mass of ice cream or other food of a similar texture, plus thrust means at its lower open end, so that, when pressure is exerted at discretion in a longitudinal direction of the tubular body, the food issues progressively from the pack for its consumption, said pack being provided with a plurality of holes in its upper closed end so that, furthermore, the food product emerges in portions instead of in a mass.

An object of the invention is also that the food should be dispensed in separate portions, in the form of strands, by way of multiple holes arranged either in the upper end of the pack, which is sealed, or else in the sides of the pack.

A further object of the invention is that the sealing of the pack should not only be secure and hygienic, but also substantially simple and economical.

### BACKGROUND OF THE INVENTION

There are food products of a special viscous texture that have to be consumed directly from a pack containing them so as to make them more convenient and, above all, cleaner to eat. A more particular case is that of sweet foods intended mainly for young children, such as ice creams and candies.

In this respect, there is a need to design packs for all kinds of products that will enable the food to be dispensed simply and hygienically, in such a way as to help the consumer to handle them without getting dirty and without wasting a good deal of the product due to spillages, etc. At the same time, however, bearing in mind younger consumers in particular, the design of such packs should prove attractive to their eyes so as to induce them to consume the product and to differentiate them from other products packed by competitors.

We are already well familiar with transparent elongated plastic packs for sweets and ice creams to the base of which we have to apply pressure by hand so that the food slides up over the plastic until it gradually emerges from an opening made in the other end just before eating it, or else it may be sucked up directly through this opening. This type of pack is very efficient and widely used for liquid sweets and water ices or lollipops, although carton packs are also extensively employed for the last of these food products.

For ice creams or sweets that come in a semi-solid state, the packs have evolved to take into account other solutions, such as those consisting of more rigid, usually carton packs housing the food, for the gradual consumption of which we have to exert an upward pressure by hand, not directly but by making use of such simple mechanisms as a plunger and push rod assembly.

In this particular respect, the actual applicant herefor is the holder of Spanish Utility Model n° 269894, wherein a disposable ice cream pack is described, structured on the basis of a cylindrical tubular body, open at both ends, in the interior of which there slides a thrust plunger, prolonged at the lower end with a rod of suitable length, serving as an actuating means for said plunger.

In this pack, described in the afore-mentioned document ES 269894 U, the mass of ice cream takes up the bulk of the cylindrical body. In the situation prior to the eating of the ice cream, the upper end of the cylindrical body, opposite the plunger, is sealed by means of a preferably paper cover attached to the mouth of the cylinder by thermowelding or any other conventional procedure. When the consumer makes ready to eat the ice cream thus packed, he has to remove this cover and cause the ice cream to emerge gradually in a block by pushing the plunger in an axial direction by means of its rod.

On the basis of this structure of receptacles for ice creams and the like, in which the food is effectively guided in its movement up to the mouth of the pack, saving the consumer from coming into manual contact with the product, a wide variety of packs are available today that add special features to differentiate one from another and make them more attractive to the consumer.

There are many on the market at the present time, although all those of this specific type basically comply with the description of Utility Model ES 269894 U, in which a particular feature is that the receptacle of the block of ice cream is a cylinder with both ends open, being sealed later in the course of the manufacture of the assembly forming the pack with, at one end the pressure means and, at the other, merely with a sealing cover which has to be removed in order to proceed to eat the ice cream, the mass of which emerges dispensed for gradual consumption but always as a unit.

Lastly, in France a pack of this type has been launched which is **characterised in that** it is sealed with a plastic film thermowelded to the mouth of the cylinder containing an ice cream, which is provided with previously die-stamped holes attached to a paper seal, so that, when the paper is removed, the holes in the film are open and the ice cream may be dispensed through them. This system has, however, a serious drawback: the plastic may cause cuts in the consumer's tongue and a number of cases have occurred, especially amongst young children.

The U.S patent application US 2003/0132253 describes a sauce dispensing gun which comprises a tubular body, a plunger and trust means to exert pressure to the sauce contained in said gun. This dispensing gun is adapted for dispensing sauces such as mustard, mayonnaise, salad dressing, etc.

The later published document WO-A-2004/063997 shows a dispenser pack having a plunger and dispensing holes in the top of the dispenser body.

### DESCRIPTION OF THE INVENTION

The present invention resolves, amongst others, the aforesaid problems in a fully satisfactory manner in each and every one of the above-mentioned aspects.

To this end, the invention consists in a dispenser pack as defined in claim 1.

The dispenser pack that is the object of the invention offers an alternative solution to those described above for the dispensing of food products susceptible to being consumed in a metered fashion directly from the actual pack, such as creamy ice creams or other viscous sweets, being provided for this purpose with a plurality of holes in its upper end, which divide up the food into threads or strands that may be consumed separately.

In the initial situation, prior to consumption, for purposes of secure transfer and storage in appropriate cold stores, the holes will normally be sealed with thermowelding or some other adhesive application procedure, by means of a protective film or an easily removable label, disposable at the time of consumption of the product, that will keep the food hermetically isolated from external agents after the manufacturing process is completed.

The dispenser pack for viscous foods that forms the object of this invention offers an alternative solution to those described above for the dispensing and supply of such foods as ice creams or any other viscous food, as for instance sweets, having for this purpose an elongated tubular body containing the viscous food and fitted with means of applying pressure at one of its ends at least in direct contact with the viscous food, whilst also being provided with holes in its body for the issue of the viscous food in a direction transverse to the direction of thrust.

The elongated tubular body may be made from various materials, such as coloured or transparent plastic or preferably carton, of either cylindrical shape or else of oval, square or rhomboid section for instance.

Unlike other ice cream packs in which the ice cream is dispensed from one of the ends, in this case it issues by way of holes perforated all along the tubular body. The holes may be arranged in the body, for example, either longitudinally or transversely, or else in helical form, so as to supply the product as the consumer turns the pack, or they may be distributed in such a way as to define a specific geometrical or fancy configuration in the middle or in the vicinity of its ends.

Initially, the holes will usually be sealed with some type of label or protective film to safeguard the food contained inside.

The pack may have either one or two plungers, each of which slides at one end of the body in such a way that in its longitudinal movement it forces the product to issue to the exterior by way of the transverse holes. These plungers may be provided with associated pushrods that protrude externally and which form the contact extremities on which the consumer acts by pressing inwards in opposing directions so as to force out the product.

The pack thus designed may be secured simply in a horizontal situation by means of the aforesaid rods permitting a more practical eating position for the consumer, who may exert pressure on the product for its consumption at the same time as he holds the pack.

Allowance is made for the possibility of having only one plunger, in which case the plunger will come into play at one end and the other will remain sealed.

In another particular solution the structure of the dispenser pack for food products of the invention is based on a hollow, tubular and preferably cylindrical body, although it may adopt other forms providing that they are adapted to supplementary thrust means so as to be able to dispense the food gradually.

Specifically, the thrust means consist of a plunger associated with a rod at its lower open end, which slides snugly in the interior of the hollow body, so that the food product issues gradually from the pack when it is pushed at discretion in a longitudinal direction.

The upper end of the pack is closed, although multiple holes are made in it, whereby the food is going to be made to issue in a gradual way thanks to the thrust means provided at the opposite end, which is originally open.

The pack may be one piece, i.e. on the one hand it has the hollow body with holes in its upper closed end and, at the other, thrust means are fitted through the opening in the lower end.

Another alternative is to close the upper end of the body with a relatively rigid plastic or carton cover, where the holes are made. This cover is suitably attached to the tubular body and it is not necessary to remove it in order to eat the food contained in said hollow body, which is divided into the tubular piece where the product is housed and its cover.

With this cover in place on the upper end of the tubular container body, when the thrust means are actuated from the lower end, the food product emerges dispensed in strands by way of the multiple holes in the cover, which is the special feature that is the object of the invention and which differentiates it from its forerunners.

If the perforated cap is eliminated, the dispenser pack for food products described here may also be used in the same way as the conventional packs incorporating thrust means, so that the food is eaten in a single block instead of by parts in individual portions in the form of strands.

This original way of eating an ice cream or a sweet product proposed here may be fun, especially for children, combining the shapes and decorations that may be given both to the hollow main body and to the cover, so as to give the impression for instance that the food issues like the hairs of a doll that grow or emerge in the form of funny little worms through the holes perforated in the pack of the invention.

In this respect, the outer face of the pack is prepared to be printed with any artwork imaginable, or else advertising referring to the manufacturer or regarding the food content.

The body or cover of the pack may also be either transparent or opaque, depending on whether or not we want the product to be visible either partly or in its entirety.

The cover, in turn, which has the function not only of sealing the hollow body of the pack superiorly, but also of dispensing the food separated in portions, maintains the same features of the tubular body with regard to structural simplicity and low manufacturing cost, being made out of plastic or carton, with a tubular configuration, while its upper outer face may adopt a configuration that is concave or convex, triangular or made up of other fanciful forms, or else simply flattened.

The dispenser cover consists of an upper face, where holes and one or more side faces are provided, depending on the tubular piece to which it has to be attached, while one end, the lower one, remains completely open for fitting to the upper end of the tubular body.

In order to adapt the cover perfectly to the tubular body and to form the hollow body where the food is kept securely, with a strong hygienic seal that will prevent the cover from becoming detached or accidentally ejected when the thrust means exert pressure, different solutions are advocated that may be combined in the same pack.

A preferred embodiment is to provide the cover with one or more press-fit or screw-up inner ribs, matching up with slots machined for this purpose in the upper end of the tubular piece of the hollow body.

Another possible configuration is to provide a slight taper in the side face or walls of the cover, so that, upon pressing the cover on the tubular piece and sealing the hollow body, they are united under pressure and it is hard to pull it off again, even as a result of the thrust of the food proper when it is going to be eaten.

Another possible embodiment is coating the tubular body, usually made of multiple layers of paper, carton or as a piece of plastic, with a material that provides greater friction in order to impede the movement of the cover fitted on it, adding a lacquer or a strip of plastic to the tubular piece, at least at its upper end.

The invention is described according to a few possible embodiment configurations, but for an expert on the subject it will be evident that multiple variations may be introduced into said embodiments without departing from the object of same.

In this way, in any of its variants the dispenser pack for food products advocated here achieves an overall upgrading of the capabilities offered to the public, particularly to children, compared with existing ones, making this pack more attractive and encouraging consumption of the product.

Without detriment to the improvement represented by this kind of ice cream pack compared with other types, since it facilitates the consumption of the food without requiring direct contact with the contents, besides preventing spillages of same caused by progressive melting, as the issue of the product is metered and, what is more, it is effected in very fine portions, which are easier to maintain under control by the consumer.

In addition, in any of the configurations described, without making use of the already existing alternative of perforating holes in a plastic film, which is sealed on the pack and through which the ice cream has to be consumed, the present invention offers advantages over this forerunner, as it prevents the problem that tongue lesions may be caused, as the pack advocated here is either a whole carton or plastic piece or else has an injected plastic cover, without presenting irregularities in the dispenser holes or edges that might injure the consumer.

### DESCRIPTION OF THE DRAWINGS

To supplement the description that is being given and in order to assist in a clearer understanding of the features of the invention, a set of drawings is adjoined as an integral part of this Patent, wherein there is represented on an informative and non-restrictive basis the following:
Figure 1.- It shows a perspective view of a dispenser pack for viscous foods in a horizontal position in a central cluster arrangement on the perimeter of the body.
Figure 2.- It shows a perspective view of a dispenser pack in a vertical position with the holes arranged in a rectangular cluster in the vicinity of one of the ends.
Figure 3.- It shows an elevational view of the dispenser pack with holes arranged longitudinally with two plungers at each end in the extended position.
Figure 4.- It shows an elevational view of the dispenser pack represented in the previous figure in the situation in which the plungers impinge on the product, which is extruded in a transverse direction through the holes.
Figure 5.- It shows an elevational section view of an embodiment which does not form part of the invention, with a concave cover, cylindrical tubular body and a plunger plus pushrod.
Figure 6.- It shows a perspective view of a possible embodiment of the cover with a flat configuration.
Figure 7.- It shows an overhead plan view of the cover according to a possible embodiment with holes arranged in the form of a circle plus another hole in the centre.
Figure 8.- It shows an elevational section view of a flat cover, inside which we may observe the ribs that fit in the grooves in the tubular body in order to pressure seal the dispenser pack that is the object of the invention.
Figure 9.- It shows a perspective view of the dispenser pack for food products with the flat perforated cover in place on the cylindrical tubular body.
Figure 10.- It shows a perspective view of the dispenser pack according to the invention for food products composed of a one-piece cylindrical tubular body.

### PREFERRED EMBODIMENT OF THE INVENTION

In the light of the figures described we now proceed to offer a detailed explanation of a preferred mode of embodiment of the dispenser pack for viscous foods which forms the object of this invention.

The dispenser pack is the type of those comprising an elongated tubular body (1) which houses the viscous food, such as ice cream or the like, and is provided with a first plunger (2) associated with thrust means (3) at the lower open end of the tubular body (1) so as to be able to exert pressure on the food at will in a longitudinal direction, determining its progressive issue from the pack for its consumption.

On the basis of these fundamental elements the main distinguishing feature of the dispenser pack is that the body (1) has a cluster of holes (4) through which the viscous food issues in the direction transverse to the direction of thrust.

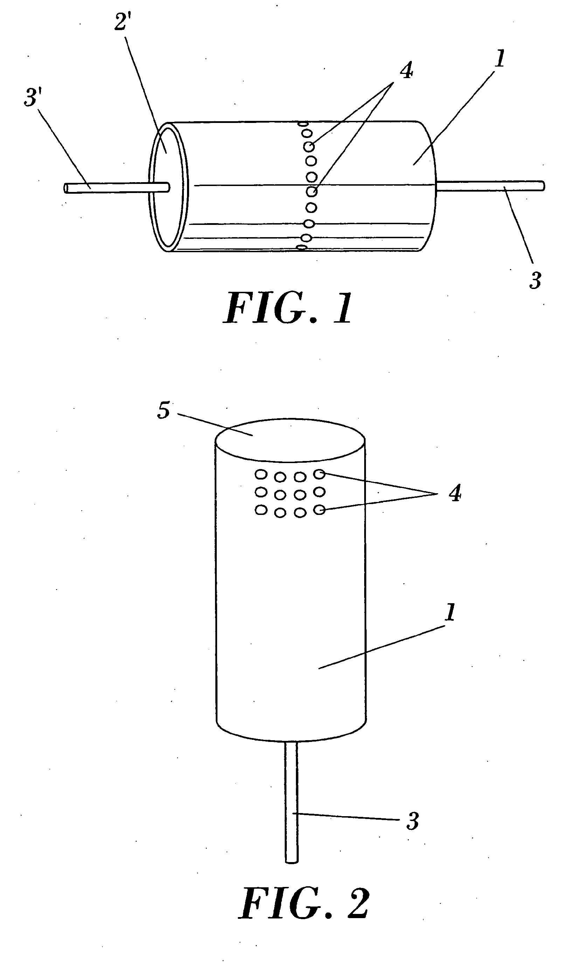

The possibility is contemplated that the upper end of the tubular body (1) should be sealed by means of a fixed cover (5), as is shown in figure 2, or else that it should be provided with a second plunger (2') and supplementary thrust means (3') that may exert pressure on the viscous food in the longitudinal direction opposite to that of the thrust means (3) to assist the issue of the viscous food through the holes (4).

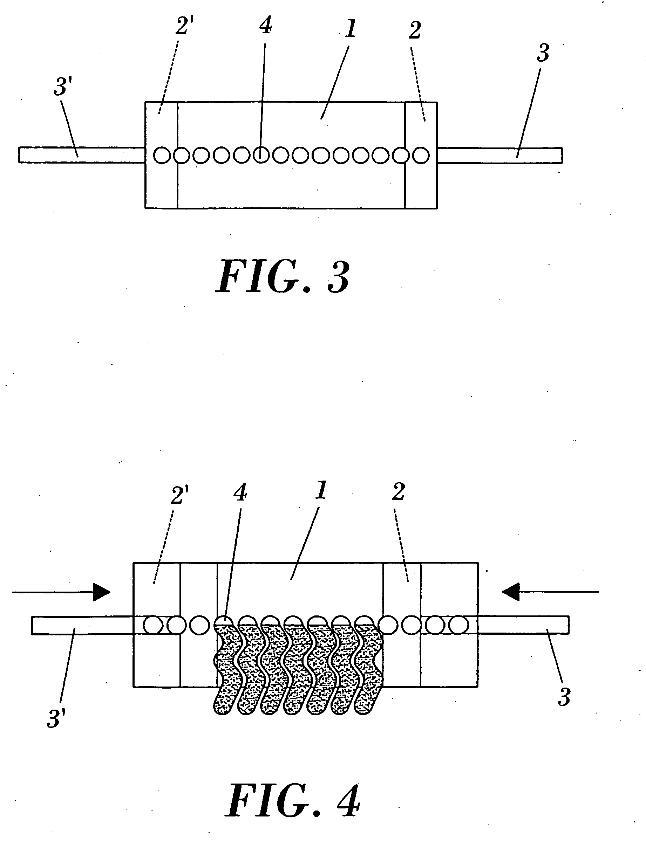

The holes (4) are arranged over the body (1) in the longitudinal direction, as may be seen in figures 3 and 4, or in the transverse direction, as represented in figure 1, or else, as appears in figure 2, the holes (4) may be arranged to form a geometrical figure, such as a rectangle or any other fancy figure.

It is envisaged that both the thrust means (3) and the supplementary thrust means (3') may consist of corresponding rods (3, 3') which act at the same time as means for holding the pack in the horizontal position during the supply of the food.

In another alternative embodiment the thrust means (3) and supplementary thrust means (3') may consist either of a bellows type mechanism or of a threaded mechanism, which may also act as elements for securing the pack during the supply process.

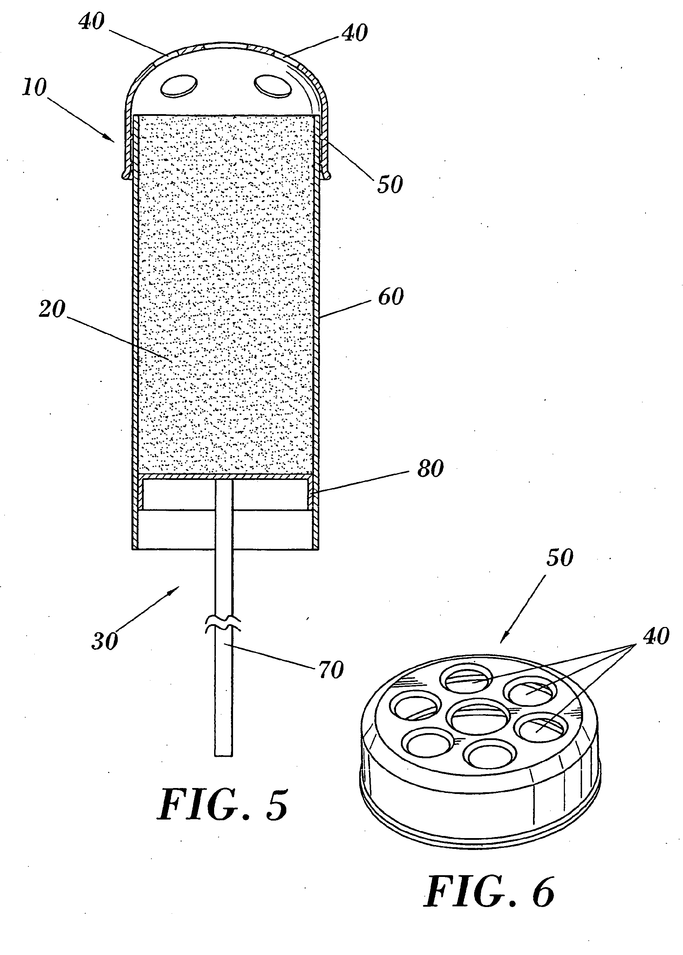

In the various configurations shown in figures 5 to 10, the food product dispenser pack described is made up of a hollow main body (10) containing the food (20), which is supplemented at its open lower end with thrust means (30) that determine the gradual issue of said food (20) from the pack for consumption purposes, being **characterised in that** at its closed upper end it is provided with holes (40) through which the food (20) issues in separate portions.

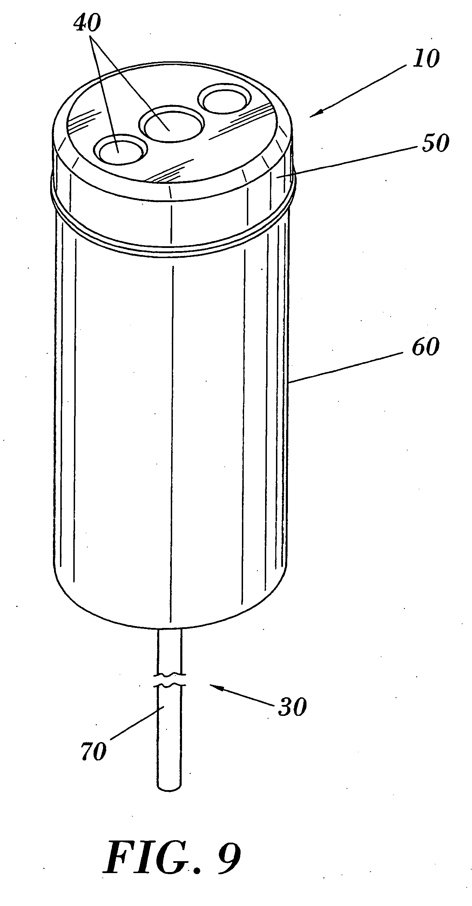

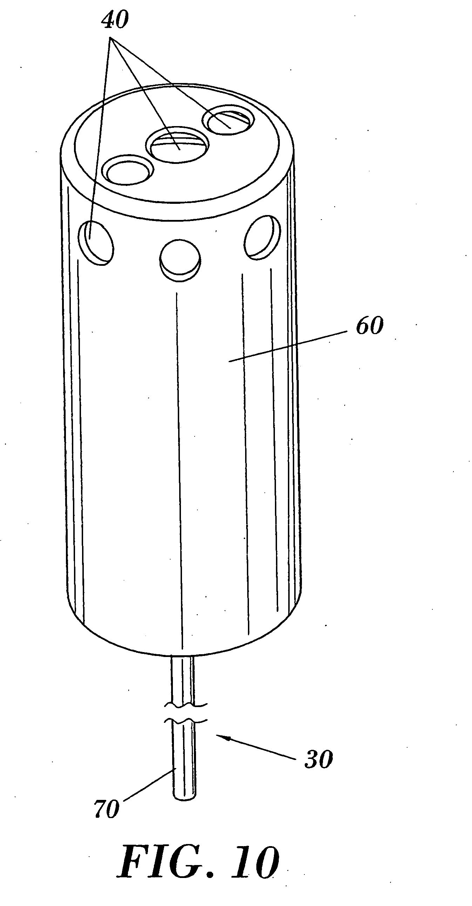

Such holes (40) may be perforated either in the closed upper end of said hollow main body (10) designed in a single piece as shown in figure10, or else in a cover (50), as the one in figure 6, which suitably seals said upper end, as is shown in figures 5 or 9.

The cover (50) may adopt various forms, cylindrical with its upper end either flat or semi-spherical, or else pyramidal, etc., endowing said upper face with volume.

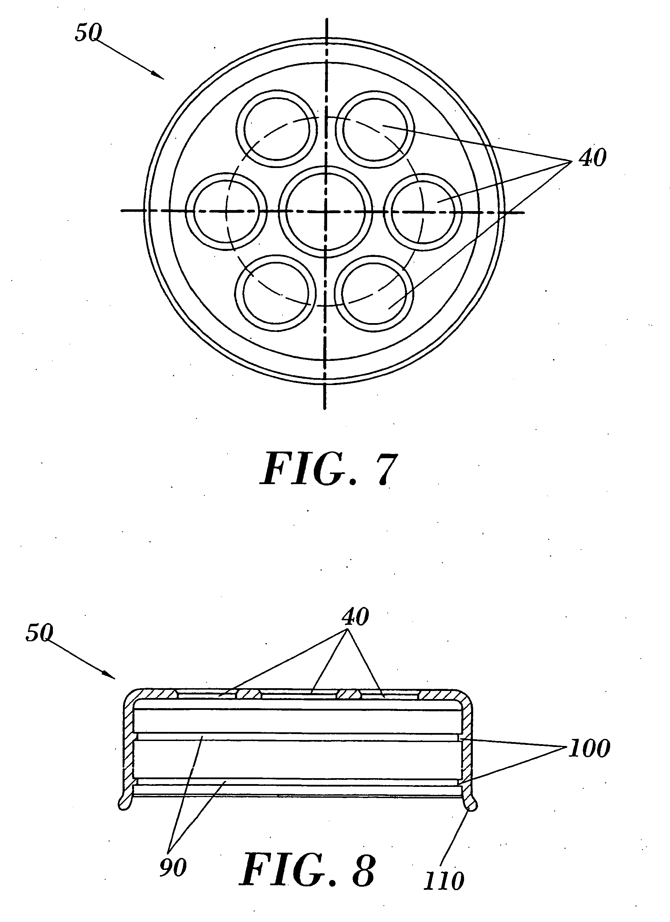

The holes (40) may have different configurations, such as simple circles, stars,..., as well as in different arrangements forming, in an orderly fashion, either circles as in figure 7 or other geometrical figures, such as concentric rings, or arranged fancifully in asymmetry.

When the hollow main body (10) is not a single piece, but is divided into a preferably cylindrical tubular piece (60), as is illustrated in figure 5, plus its cover (50) perforated with holes (40), the coupling between the cover (50) and said tubular piece (60) may be executed in different ways, as described above.

A possible form is that represented in figure 8, where we may observe the grooves (90) made in the tubular piece (60) in alignment with at least one rib (100) incorporating the cover (50) for press-fitting on said tubular piece (60). In addition, at its open lower end the cover (50) may optionally be provided with a skirt (110) which guides the penetration of the tubular piece (50) in its cover (50), the diameter of which decreases slightly upon extending laterally from the skirt (110), engaging more tightly with the tubular piece (50) so as to prevent the cover (50) from being ejected accidentally upon exerting pressure on the food (20) with its thrust means (30).

For this preferred embodiment, the thrust means (30) consist of a plunger (80), which forms a moving base for the tubular piece (60) that determines the container receptacle for the main body (10) of the pack, assisted by a pushrod (70) in the open lower end of said tubular piece (60), projecting out of its base, which comes into operation snugly in the interior of said main body (10).

In this way, upon exerting pressure at our discretion on the food (20) with the plunger (80) by actuating the pushrod (70) manually in a direction longitudinal to the tubular piece (60), we secure its gradual issue in line with its consumption, besides being metered by the outward extrusion of the food (20) in the form of strands by way of the holes (40) arranged in the cover (50).

Furthermore, a fine plastic or paper film is incorporated in the manufacture of the pack. This is attached to the outside edge of the hollow main body (10) by means of thermowelding or some other traditional technique and adapts in shape to its upper closed end and, in the case of the preferred embodiment, to the cover (50), taking on its configuration for the obvious purpose of providing perfect protection for the food (20) housed inside the dispenser pack until the time comes for this to be eaten, when it has to be removed.

In short, said food (20) is protected securely and cleanly by means of the actual hollow main body (10), plus the cover (50), at the upper end with the protective film, along with the lower end thrust means (30) plunger (80), which endows the assembly with a hygienic airtight seal.

The outer face of said laminar body, as well as the whole exterior of the hollow main body (10), including the cover (50), may be printed with advertising or decorative artwork or inscriptions.

The shape, dimensions, materials and, in general, whatsoever is ancillary or secondary, may be variable providing that it does not alter, change or modify the essential nature of the object being described.

In the light of this description and set of figures, an expert on the matter may appreciate that the embodiments of the invention that have been described may be combined in multiple ways, giving rise to more possible variants within the object of the invention.

Thus, together with an optimal performance from the standpoint of the protection and hygiene of the food product in itself, the dispenser pack described is designed with a view to achieving a substantial enhancement of the appeal of said product in the consumer's eyes, with the subsequent beneficial impact on the manufacturer in commercial terms.

## Claims

1. Dispenser pack for creamy ice-cream comprising an elongated tubular body having a lower open end, an upper end and a side wall (1) between said upper and lower ends, wherein said tubular body contains creamy ice-cream, and is provided with a first plunger (2) associated with thrust means at said open lower end of the tubular body, for the purpose of exerting pressure on the creamy ice-cream at will in a longitudinal direction of the tubular body, thus determining its gradual issue from the pack for its consumption, **characterised in that**, said side wall (1) is provided with side holes (4) so that the creamy ice-cream can be dispensed in a substantially transverse direction to the direction of trust of said plunger (2), and wherein said holes (4)are suitable for dispensing creamy ice-cream by extrusion and for allowing its consumption directly from the pack, and wherein said thrust means consists of a pushrod (3) that protrudes externally, that act at the same time as element for supporting the pack in the horizontal position during the supply of the ice-cream.

2. Dispenser pack according to claim 1, **characterised in that** the upper end of the tubular body is provided with a second plunger (2') and a second rod (3') that are able to exert pressure on the creamy ice-cream in a longitudinal direction opposite to that of the thrust means (3) so as to facilitate the issue of the viscous food by way of the side holes (40).

3. Dispenser pack according to claim 1 **characterised in that** the pack adopts an oval form.

4. Dispenser pack according to claim 1, **characterised in that** the pack adopts a rhomboidal form.

5. Dispenser pack according to claim 1, **characterised in that** the pack adopts a square form.

6. Dispenser pack according to claim 1 **characterised in that** the holes (4) through which the creamy ice cream issues are helical shaped all along the pack.

7. Dispenser pack according to claim 1 **characterised in that** the holes (4) are arranged in the form of clusters in the pack.

8. Dispenser pack according to claim 1 **characterised in that** the holes (4) are arranged to form geometrical forms and fancy patterns.

9. Dispenser pack according to claim 1, **characterised in that** the hollow main body (10) is a single piece.

10. Dispenser pack according to claim 1 **characterised in that** the tubular body is coated externally, at least at its upper end, with a plastic material that rubs against the interior of the cover (50), impeding its disengagement.

## Patentansprüche

1. Spenderpackung für cremiges Speiseeis, umfassend einen länglichen röhrenförmigen Körper mit einem unteren offenen Ende, einem oberen Ende und einer Seitenwand (1) zwischen dem genannten unteren und dem genannten oberen Ende, wobei der genannte röhrenförmige Körper cremiges Speiseeis enthält und mit einem ersten Schieber (2) versehen ist, der mit einem Schubmittel dem genannten offenen unteren Ende des röhrenförmigen Körpers zugeordnet ist, um in einer Längsrichtung des röhrenförmigen Körpers nach Belieben Druck auf das cremige Speiseeis auszuüben, wodurch sein allmähliches Austreten aus der Packung zum Verzehr bestimmt wird, **dadurch gekennzeichnet, dass** die genannte Seitenwand (1) mit seitlichen Löchern (4) versehen ist, so dass das cremige Speiseeis in einer zu der Schubrichtung des genannten Schiebers (2) im Wesentlichen quer verlaufenden Richtung ausgegeben werden kann, und wobei die genannten Löcher (4) zum Ausgeben von cremigem Speiseeis durch Durchdrücken geeignet sind und geeignet sind, um den Verzehr direkt aus der Packung zuzulassen, und wobei das genannte Schubmittel aus einem nach außen vorstehenden Schieberstiel (3) besteht, der während der Speiseeislieferung gleichzeitig als Element zum Halten der Packung in der horizontalen Position dient.

2. Spenderpackung nach Anspruch 1, **dadurch gekennzeichnet, dass** das obere Ende des röhrenförmigen Körpers mit einem zweiten Schieber (2') und einem zweiten Stiel (3') versehen ist, die in einer Längsrichtung, die der des Schubmittels (3) entgegengesetzt ist, Druck auf das cremige Speiseeis ausüben können, um das Austreten des dickflüssigen Nahrungsmittels durch die seitlichen Löcher (40) zu erleichtern.

3. Spenderpackung nach Anspruch 1, **dadurch gekennzeichnet, dass** die Packung eine ovale Form hat.

4. Spenderpackung nach Anspruch 1, **dadurch gekennzeichnet, dass** die Packung eine rhombische Form hat.

5. Spenderpackung nach Anspruch 1, **dadurch gekennzeichnet, dass** die Packung eine viereckige Form hat.

6. Spenderpackung nach Anspruch 1, **dadurch gekennzeichnet, dass** die Löcher (4), durch die das cremige Speiseeis austritt, spiralförmig an der ganzen Packung entlang ausgebildet sind.

7. Spenderpackung nach Anspruch 1, **dadurch gekennzeichnet, dass** die Löcher (4) in Form von Gruppen in der Packung angeordnet sind.

8. Spenderpackung nach Anspruch 1, **dadurch gekennzeichnet, dass** die Löcher (4) so angeordnet sind, dass sie geometrische Formen und Muster bilden.

9. Spenderpackung nach Anspruch 1, **dadurch gekennzeichnet, dass** der hohle Hauptkörper (10) einteilig ist.

10. Spenderpackung nach Anspruch 1, **dadurch gekennzeichnet, dass** der röhrenförmige Körper zumindest an seinem oberen Ende äußerlich mit einem Plastikmaterial beschichtet ist, das am Inneren des Deckels (50) in reibender Anlage ist, so dass sein Lösen verhindert wird.

## Revendications

1. Emballage distributeur de crème glacée crémeuse comprenant un corps tubulaire allongé ayant une extrémité inférieure ouverte, une extrémité supérieure et une paroi latérale (1) entre lesdites extrémités supérieure et inférieure, où ledit corps tubulaire contient une crème glacée crémeuse, et est muni d'un premier piston (2) associé à des moyens de poussée au niveau de ladite extrémité inférieure ouverte du corps tubulaire, dans le but d'exercer une pression sur la crème glacée crémeuse à souhait dans une direction longitudinale du corps tubulaire, en déterminant ainsi sa sortie graduelle de l'emballage pour sa consommation, **caractérisé en ce que**, ladite paroi latérale (1) est munie de trous latéraux (4) de sorte que la crème glacée crémeuse puisse être distribuée dans une direction sensiblement transversale à la direction de poussée dudit piston (2), et où lesdits trous (4) conviennent pour distribuer une crème glacée crémeuse par extrusion et pour permettre sa consommation directement depuis l'emballage, et où lesdits moyens de poussée consistent en une tige de poussée (3) qui dépasse vers l'extérieur, qui sert en même temps d'élément de support pour l'emballage dans la position horizontale durant l'alimentation de la crème glacée.

2. Emballage distributeur selon la revendication 1, **caractérisé en ce que** l'extrémité supérieure du corps tubulaire est munie d'un deuxième piston (2') et d'une deuxième tige (3') qui sont à même d'exercer une pression sur la crème glacée crémeuse dans une direction longitudinale opposée à celle des moyens de poussée (3) de manière à faciliter la sortie de l'aliment visqueux à travers les trous latéraux (40).

3. Emballage distributeur selon la revendication 1 **caractérisé en ce que** l'emballage adopte une forme ovale.

4. Emballage distributeur selon la revendication 1, **caractérisé en ce que** l'emballage adopte une forme rhomboïde.

5. Emballage distributeur selon la revendication 1, **caractérisé en ce que** l'emballage adopte une forme carrée.

6. Emballage distributeur selon la revendication 1 **caractérisé en ce que** les trous (4) à travers lesquels sort la crème glacée crémeuse sont de forme hélicoïdale sur l'ensemble de l'emballage.

7. Emballage distributeur selon la revendication 1 **caractérisé en ce que** les trous (4) sont agencés sous la forme d'agrégats dans l'emballage.

8. Emballage distributeur selon la revendication 1 **caractérisé en ce que** les trous (4) sont agencés pour former des formes géométriques et des motifs fantaisie.

9. Emballage distributeur selon la revendication 1, **caractérisé en ce que** le corps principal creux (10) est une pièce unique.

10. Emballage distributeur selon la revendication 1 **caractérisé en ce que** le corps tubulaire est revêtu à l'extérieur, au moins à son extrémité supérieure, avec un matériau plastique qui frotte contre l'intérieur du revêtement (50), empêchant son désengagement.
